# EUROPEAN PATENT SPECIFICATION

(11) **EP 1 645 463 B1**
(45) Date of publication and mention of the grant of the patent: **19.12.2007**
(21) Application number: 04425797.0
(22) Date of filing: 25.10.2004
(51) Int. Cl.: B60P 1/02, B60P 1/16, B60P 1/44

(54) **Hydraulic circuit for lifting and lowering beds and/or footboards of a trailer, semi-trailer and the like**
Hydraulikkreis zum Heben und Senken von Ladeflächen in Lastfahrzeugen
Circuit hydraulique pour lever et baisser des plate-formes de charge dans un véhicule

(30) Priority: 08.10.2004 WO PCT/IT2004/000559
(43) Date of publication of application: 12.04.2006
(73) Proprietor: Carrozzeria Pezzaioli S.r.l., 25018 Montichiari (Brescia) (IT)
(72) Inventor: Pezzaioli, Giorgio, Carrozzeria Pezzaioli S.r.l., 25018 Montichiari (Brescia) (IT)
(74) Representative: Crippa, Paolo Ernesto

(56) References cited:
- DE-A1- 19 960 302
- US-A- 5 110 251
- US-A- 5 791 860

## Description

The present invention relates to a hydraulic circuit, according to the preamble of claims 1, 13 and 14. It also relates to a vehicle comprising such a circuit.

The use of hydraulic circuits is known, comprising hydraulic actuators for lifting beds and/or footboards. Said actuators are generally single action actuators, in other words, they are suitable to influence the bed so that it can be lifted, whereas the lowering of the bed is guaranteed by gravity acting on the drained actuators.

In these types of systems, lock valves, in other words unidirectional valves, are foreseen to ensure that the lifted bed is kept at the required height. These valves allow work fluid to pass to the actuator to lift the bed, however they stop the fluid from passing in the opposite direction to prevent the bed from lowering.

Whereas when the bed needs to be lowered, the lock valves are commanded to allow the passage of the fluid to come out of the cylinder.

An example of such circuits is disclosed in DE-A-19960302. However these circuits present some disadvantages.

Firstly they do not guarantee correct lowering of the bed, which is basically due to the different load conditions weighing on each actuator. These load conditions influence the ways in which the actuator withdraws, starting with the speed.

This disadvantage is particularly felt in the sector of constructing trailers, semi-trailers, lorries and the like, for transporting goods.

In fact in this sector the aforesaid circuits act in conjunction with footboards or beds of a considerable size, and their load conditions weighing on each actuator can also be very different; this results in unwanted inclination of the bed or footboard and sometimes their breaking.

**.** It is the object of the present invention to realise a hydraulic circuit, which is particularly suitable to act in conjunction with a bed and/or footboard, in particular of a trailer, semi-trailer and the like, for their correct lifting and lowering.

Such object is achieved with a hydraulic circuit according to the following claims 1, 13 and 14.

The characteristics and advantages of the circuit according to the present invention will be appreciated from the description reported below of an embodiment, given by way of example, which is not limiting, in keeping with the accompanying figures, wherein:

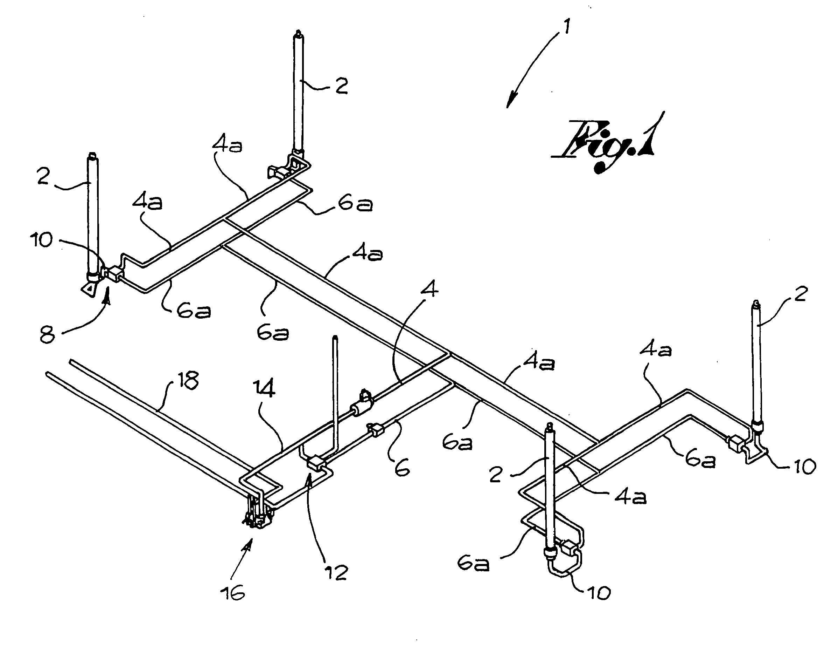

- figure 1 shows a three-dimensional, schematic view of a hydraulic circuit;

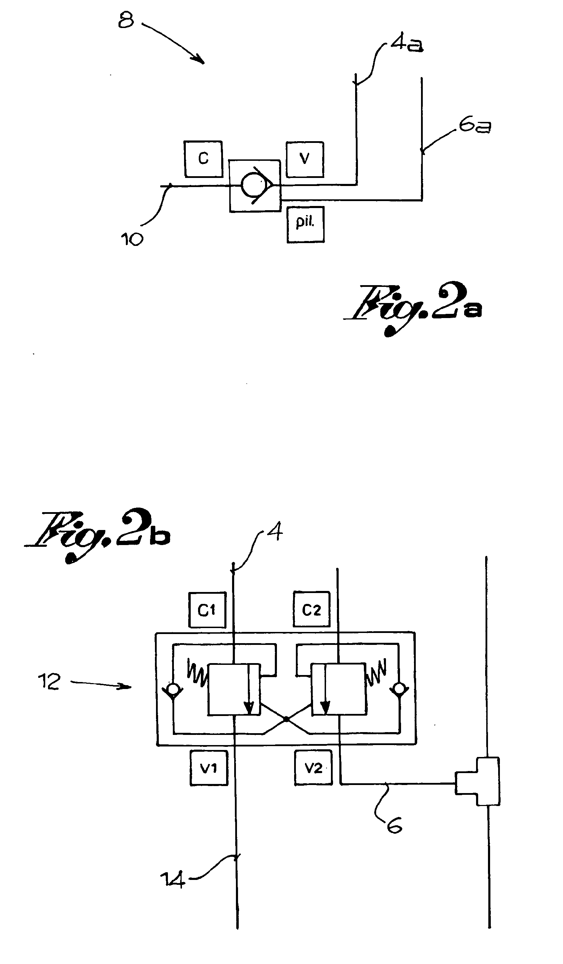

- figures 2a and 2b represent a diagram of a lock valve and a main lock valve of the hydraulic circuit in figure 1, and

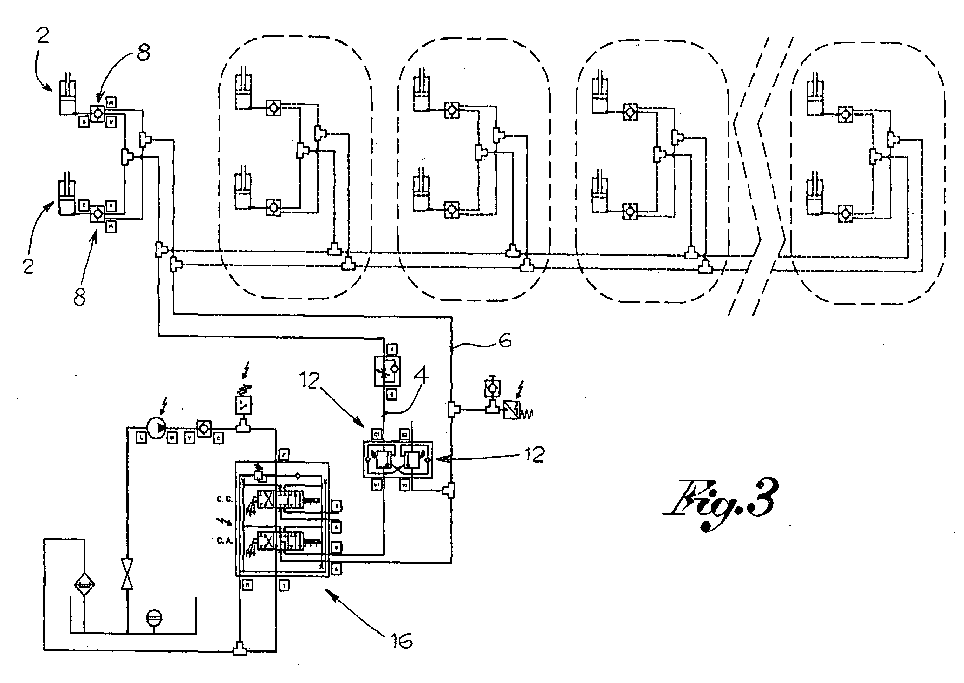

- figure 3 represents a detailed diagram of a hydraulic system comprising the circuit in figure 1.

With reference to the accompanying figures, a hydraulic circuit is globally indicated with reference numeral 1, according to the present invention, according to a preferred embodiment.

Said circuit comprises at least one actuator 2 for lifting a bed and/or footboard. Said actuator is preferably a single action type actuator, in other words it is suitable to influence the bed only for lifting, whereas the lowering of said bed is achieved by gravity.

According to a variation of embodiment, said actuator is a double action type actuator, in other words it is suitable to influence the footboard so it can be both lifted and lowered.

The hydraulic circuit 1 comprises a main line 4 that is operatively connected to said actuators.

Said main line 4 is preferably connected in parallel to said actuators 2. In other words, said main line 4 comprises branching out stretches 4a, which branch out from said main line 4.

Moreover, said hydraulic circuit 1 comprises a pilot line 6, which is operatively connected to said actuators 2 suitable to transmit a pilot signal in the form of work fluid pressure.

According to a preferred embodiment, said pilot line 6 is connected in parallel to said actuators 2. In other words, said pilot line 6 comprises branching out stretches 6a, which branch out from said pilot line 6.

The hydraulic circuit 1 also comprises at least one lock valve 8. Said circuit preferably comprises a lock valve 8 for each actuator 2.

Said lock valve is, for example, a three-way valve, in particular with two inputs and one output. In particular, said lock valve 8 is connected in input to a branching out stretch 4a of the main line 4 of the circuit, to a branching out stretch 6a of the pilot line 6, and, in output, to a connecting strip 10 to the respective actuator 2.

The lock valve 8 is realised so that it constitutes a unidirectional valve, sometimes called a "no return" valve, from the main line 4 to the connecting strip 10 to the actuator 2.

In other words, when there is no pilot signal along the pilot line 6, in other words when said pilot line is drained, the lock valve 8 can be crossed by the work fluid from the main line 4 to the connecting strip 10, feeding the actuator. In these conditions, on the contrary, the lock valve cannot be crossed by the work fluid from the connecting strip 10 to the main line 4, preventing the actuator from withdrawing.

When there is a pilot signal along the pilot line 6, the lock valve 8 is piloted on opening, in other words it allows the work fluid to pass from the connecting strip 10 to the main line 4.

According to a preferred embodiment, said lock valve is gauged at a first level of pressure, for example between 25 and 45 bars inclusive, preferably between 30 and 40 bars.

In other words, when the fluid pressure in the pilot line 6 reaches said first level of pressure, the lock valve is open, as described above.

Moreover, said hydraulic circuit preferably comprises a pressure switch. Moreover, said hydraulic circuit preferably comprises a pressure test connector. Said pressure switch and/or said pressure test connector are preferably operatively connected to said pilot line 6, upstream of said branching out stretches 6a.

Moreover, the hydraulic circuit 1 comprises a main lock valve 12 and a distributor 16 upstream of said main lock valve.

Said main lock valve 12 is preferably a four-way valve with two inputs and two outputs.

A first output is drained. A second output is connected to the main line 4.

A first input is connected to the pilot line 6. A second input is connected to a connecting strip 14 with the distributor 16.

Said main lock valve 12 comprises two normally closed two-way valves, in other words to prevent the work fluid from passing unless a preset command signal is given.

In particular, said two-way valves are gauged at a second level of pressure, which is generally much higher than the first level of pressure at which the lock valves 8 are gauged.

Said second level of pressure is preferably equal to three or four times the first level of pressure.

The first two-way valve is connected to the connecting strip 14 and to the main line 4. The second two-way valve is connected to the pilot line 6 and is drained.

The first two-way valve is influenced on opening by the pilot signal and by the work fluid in the main line 4. The second two-way valve is influenced on opening by the level of pressure of the connecting strip 14.

The distributor 16 is connected in input to a power line 18 that is connected to a device for putting the fluid under pressure, for example an electro-pump, which is also drained.

In a first position of the distributor, said neutral position, the pilot line 6 is drained. Consequently the lock valves 8 do not receive any pilot signal and stop the actuator from withdrawing.

In other words, in said conditions, the lifted bed or footboard stay at the required height.

This raised position is also maintained in the event of work fluid leaking upstream of the lock valves 8.

In a second position of the distributor 16, said lifting position, the power line 18 upstream of the distributor is connected to the connecting strip 14 downstream of this.

The work fluid in the connecting strip 14, put under pressure by the electro-pump, influences the first two-way valve of the main lock valve 12, bringing said first two-way valve from the normally closed position to the open position, in which the connecting strip 14 is joined to the main line 4.

In said state, the actuators are fed with work fluid and the bed or footboard is lifted.

In a third position of the distributor 16, said lowering position, the pilot line 6 is put under pressure.

On opening, said pilot line 6 pilots the lock valves 8, so that said valves can be crossed by the work fluid from the connecting strip 10 to the branching out stretch 4a of the main line 4.

In other words, the actuators are authorised to lower, although this does not take place until the first two-way valve of the main lock valve 12 is open.

The first two-way valve of the main lock valve 12 is influenced on opening by the level of pressure in the main line 4.

The second level of pressure is much higher than the first level of pressure that makes the lock vales 8 open, so the main lock valve 12 only opens when the second level of pressure is reached in the main line by means of the load weighing on the bed.

This guarantees simultaneous lowering of the actuators.

Innovatively, according to the present invention the hydraulic circuit allows correct lowering of the bed or floorboard that are influenced by the actuators.

Advantageously, the circuit foresees a first valve to authorise the lowering and a second valve which effectively permits the lowering. This second valve is brought into an open position only when there is a determined load weighing on the bed.

This circuit is particularly suitable for use with commercial vehicles, trailers, semi-trailers and lorries, which often present a considerable difference in the conditions of the load weighing on each actuator, as they have large beds for lifting or lowering.

Also advantageously the above-described circuit allows the bed or footboard to be held at a determined height, even when there is a leakage of work fluid.

Advantageously, note that the above-described circuit allows the authorisation to lower the actuators, which is piloted by the pilot signal of the pilot line, and the actual lowering, which is commanded by the load conditions weighing on the bed or footboard.

In other words, the lowering takes place when it is commanded and authorised. If there is also authorisation for all of the lock valves, but not a lowering command, in other words the main lock valve stays closed, the lowering does not take place.

Clearly those skilled in the art can make modifications and variations to the above described circuit to satisfy specific, contingent needs.

In a variation of embodiment, a bed or footboard, for example, act in conjunction with a number of actuators for their lifting and lowering, and said hydraulic circuit presents a number of lock valves inferior to the number of actuators.

In other words, in a variation of embodiment, not all of the actuators are fitted with a lock valve.

These variations are also to be included in the scope of protection defined by the following claims.

## Claims

1. Hydraulic circuit (1) suitable to act in conjunction with a bed and/or footboard to be lifted and/or lowered, said circuit being joinable to a device for putting a work fluid under pressure, wherein said circuit comprises:
- at least one actuator (2) that is operatively connectable to said bed or said footboard;
- a main line (4) for feeding the work fluid to said actuator (2);
- a pilot line (6) separate from said main line (4), which is suitable to transmit a pilot signal;
- at least one lock valve (8) set upstream of each actuator (2), which is operatively connected to said main line and to said pilot line, said valve being unidirectional towards the actuator and pilotable on opening in the opposite direction and being gauged on opening at a first level of pressure of the pilot line (6); said circuit being **characterised in that** it also comprises
- a distributor (16) that is operatively connected to said main line (4) and to said pilot line (6) and joinable to said device for putting the fluid under pressure; and
- a main lock valve (12) upstream of said at least one lock valve (8) and downstream of said distributor, which is operatively connected to said distributor (16), to said pilot line and to said main line, said main lock valve (12) being gauged on opening at a second level of pressure of the main line (4), which is greater than the first level of pressure, in said open position the reflux of the work fluid being allowed from the main line.

2. Circuit according to claim 1, wherein said at least one actuator (2) is a single action actuator.

3. Circuit according to claim 1, wherein said at least one actuator (2) is a double action actuator.

4. Circuit according to any one of the previous claims, wherein said main lock valve (12) is a four-way valve.

5. Circuit according to any one of the claims 1 to 13, wherein said lock valve (8) is a three-way valve.

6. Circuit according to any one of the previous claims, wherein said distributor (16) presents a neutral position, in which said pilot line (6) is drained.

7. Circuit according to any one of the previous claims, wherein said distributor (16) presents a lifting position in which said device for putting the fluid under pressure is operatively connected to said main line (4).

8. Circuit according to any one of the previous claims, wherein said distributor presents a lowering position, in which said pilot line (6) is under pressure.

9. Hydraulic system comprising a circuit (1) realised in according to any one of the previous claims, additionally comprising said device for putting the fluid under pressure.

10. System according to claim 9, wherein said device for putting the fluid under pressure is an electro-pump.

11. Trailer, semi-trailer or vehicle for transporting goods comprising a bed or a footboard to be lifted and lowered, and a circuit according to any one of the previous claims from 1 to 8.

12. Trailer, semi-trailer or vehicle according to claim 11 comprising additional actuators, which do not act in conjunction with lock valves (8).

13. Hydraulic circuit (1) suitable to act in conjunction with a bed and/or footboard to be lifted and lowered, wherein said circuit comprises:
- at least one actuator (2) that is operatively connectable to said bed or said footboard;
- a main line (4) for feeding the work fluid to said actuator (2);
- a pilot line (6), separate from said main line (4), that is suitable to transmit a pilot signal;
- at least one lock valve (8) set upstream of each actuator (2), which is operatively connected to said main line, said valve being unidirectional towards the actuator and pilotable on opening in the opposite direction by the pilot signal;
said circuit being **characterised in that** it also comprises a main lock valve (12), which is operatively connected to said main line (4), said main lock valve (12) being pilotable on opening by the load conditions weighing on the bed to allow the reflux of the work fluid from the main line.

14. Hydraulic circuit (1) suitable to act in conjunction with a bed and/or a footboard for lifting and lowering, wherein said circuit comprises:
- at least one actuator (2) that is operatively connectable to said bed or said footboard;
- a main line (4) to feed the work fluid to said actuator (2);
- a pilot line (6), separate from said main line (4), suitable to transmit a pilot signal;
- at least one lock valve (8) set upstream of each actuator (2), which is operatively connected to said main line; said circuit being **characterized in that** it also comprises
- a main lock valve (12), upstream of the at least one lock valve (8), which is operatively connected to said main line (4); wherein to lower the bed, said pilot signal authorises the at least one lock valve (8) and the load weighing on the bed opens said main lock valve (12) for the reflux of the work fluid from the main line (4).

## Patentansprüche

1. Hydraulikkreis (1), geeignet zur Wirkung in Verbindung mit einer Ladefläche und/oder einer Plattform, die angehoben und gesenkt werden soll, wobei der Kreis an eine Vorrichtung zum Unter-Druck-Setzen eines Arbeitsfluids anbringbar ist, wobei der Kreis umfasst:
- mindestens einen Betätiger bzw. Stellglied (2), der betriebsmäßig an die Ladefläche oder Plattform anschließbar ist;
- eine Hauptleitung (4) für das Zuführen des Arbeitsfluids zu dem Betäti-ger (2);
- eine Pilot- bzw. Steuerleitung (6), getrennt von der Hauptleitung (4), die geeignet ist, ein Pilot- bzw. Steuersignal zu übertragen;
- mindestens ein Sperrventil (8), eingesetzt stromaufwärts von jedem Betätiger (2), das betriebsmäßig an die Hauptleitung und an die Pilot- bzw. Steuerleitung angeschlossen ist, wobei das Ventil unidirektional in einer Richtung zum Betätiger ist und beim bzw. nach Öffnen in die entgegen gesetzte Richtung steuerbar ist und beim bzw. nach Öffnen auf einen ersten Druckwert der Pilot- bzw. Steuerleitung (6) kalibriert bzw. einge-stellt ist;
wobei der Kreis **dadurch gekennzeichnet ist, dass** er auch umfasst
- einen Verteiler (16), der betriebsmäßig an die Hauptleitung (4) und an die Pilot- bzw. Steuerleitung (6) angeschlossen ist und an die Vorrich-tung für das Unter-Druck-Setzen des Fluids anbringbar ist; und
- ein Hauptsperrventil (12), stromaufwärts von dem zumindest einen Sperrventil (8) und stromabwärts von dem Verteiler, das betriebsmäßig an den Verteiler (16), an die Pilot- bzw. Steuerleitung und an die Haupt-leitung angeschlossen ist, wobei das Hauptsperrventil (12) beim bzw. nach Öffnen auf einen zweiten Druckwert der Hauptleitung (4) kalibriert bzw. eingestellt ist, der größer als der erste Druckwert ist, wobei in der offenen Position der Rückfluss des Arbeitsfluids von der Hauptleitung zugelassen wird.

2. Kreis nach Anspruch 1, wobei der zumindest eine Betätiger (2) ein einfach wirkender Betätiger ist.

3. Kreis nach Anspruch 1, wobei der zumindest eine Betätiger (2) ein doppelt wirkender Betätiger ist.

4. Kreis nach einem der vorangehenden Ansprüche, wobei das Hauptsperrventil (12) ein Vierwegeventil ist.

5. Kreis nach einem der Ansprüche 1 bis 3, wobei das Sperrventil (8) ein Dreiwegeventil ist.

6. Kreis nach einem der vorangehenden Ansprüche, wobei der Verteiler (16) ei-ne Mittelstellung bietet, in der die Pilot- bzw. Steuerleitung (6) abgelassen wird.

7. Kreis nach einem der vorangehenden Ansprüche, wobei der Verteiler (16) ei-ne anhebende Position bietet, in der die Vorrichtung für das Unter-Druck-Setzen des Fluids betriebsmäßig an die Hauptleitung (4) angeschlossen ist.

8. Kreis nach einem der vorangehenden Ansprüche, wobei der Verteiler eine senkende Position bietet, in der die Pilot- bzw. Steuerleitung (6) unter Druck ist.

9. Hydrauliksystem, das einen Kreis (1) gemäß einem der vorangehenden Ansprüche umfasst, das zusätzlich die Vorrichtung für das Unter-Druck-Setzen des Fluids enthält.

10. System nach Anspruch 9, wobei die Vorrichtung für das Unter-Druck-Setzen des Fluids eine elektrische Pumpe ist.

11. Anhänger, Sattelschleppzug oder Fahrzeug für das Transportieren von Waren, mit einer Ladefläche oder einer Plattform, die angehoben und gesenkt werden soll, und einem Kreis nach einem der vorangehenden Ansprüche von 1 bis 8.

12. Anhänger, Sattelschleppzug oder Fahrzeug nach Anspruch 11 mit zusätzlichen Betätigern, die nicht in Verbindung mit Sperrventilen (8) fungieren.

13. Hydraulikkreis (1), geeignet zur Wirkung in Verbindung mit einer Ladefläche und/oder einer Plattform, die angehoben und gesenkt werden soll, wobei der Kreis umfasst:
- mindestens einen Betätiger bzw. Stellglied (2), der betriebsmäßig an die Ladefläche oder Plattform anschließbar ist;
- eine Hauptleitung (4) für das Zuführen des Arbeitsfluids zu dem Betäti-ger (2);
- eine Pilot- bzw. Steuerleitung (6), getrennt von der Hauptleitung (4), die geeignet ist, ein Pilot- bzw. Steuersignal zu übertragen;
- mindestens ein Sperrventil (8), eingesetzt stromaufwärts von jedem Betätiger (2), das betriebsmäßig an die Hauptleitung angeschlossen ist, wobei das Ventil unidirektional in einer Richtung zum Betätiger ist und beim bzw. nach Öffnen in die entgegen gesetzte Richtung durch das Pi-lot- bzw. Steuersignal steuerbar ist;
wobei der Kreis **dadurch gekennzeichnet ist, dass** er auch umfasst
ein Hauptsperrventil (12), das betriebsmäßig an die Hauptleitung (4) angeschlossen ist, wobei das Hauptsperrventil (12) beim bzw. nach Öffnen durch die Belastungszustände, die auf der Ladefläche lasten, steuerbar ist, um den Rückfluss des Arbeitsfluids von der Hauptleitung zu erlauben.

14. Hydraulikkreis (1), geeignet zur Wirkung in Verbindung mit einer Ladefläche und/oder einer Plattform zum Anheben und Senken, wobei der Kreis umfasst:
- mindestens einen Betätiger bzw. Stellglied (2), der betriebsmäßig an die Ladefläche oder Plattform anschließbar ist;
- eine Hauptleitung (4) für das Zuführen des Arbeitsfluids zu dem Betäti-ger (2);
- eine Pilot- bzw. Steuerleitung (6), getrennt von der Hauptleitung (4), die geeignet ist, ein Pilot- bzw. Steuersignal zu übertragen;
- mindestens ein Sperrventil (8), eingesetzt stromaufwärts von jedem Betätiger (2), das betriebsmäßig an die Hauptleitung angeschlossen ist,
wobei der Kreis **dadurch gekennzeichnet ist, dass** er auch umfasst
- ein Hauptsperrventil (12), stromaufwärts von dem zumindest einen Sperrventil (8), das betriebsmäßig an die Hauptleitung (4) angeschlos-sen ist,
wobei, um die Ladefläche zu senken, das Pilot- bzw. Steuersig-nal das mindestens eine Sperrventil (8) autorisiert und die Last, die auf der Ladefläche lastet, das Hauptsperrventil (12) für den Rückfluss des Arbeitsfluids von der Hauptleitung (4) öffnet.

## Revendications

1. Circuit hydraulique (1) adapté pour agir conjointement à une passerelle et/ou une plateforme de charge devant être levée et abaissée, ledit circuit pouvant être relié à un dispositif destiné à pressuriser un fluide de travail, dans lequel ledit circuit comprend :
- au moins un actionneur (2) qui est connectable de manière opérationnelle à ladite passerelle ou ladite plateforme de charge ;
- une conduite principale (4) destinée à amener le fluide de travail audit actionneur (2) ;
- une conduite pilote (6) séparée de ladite conduite principale (4), qui est adaptée pour transmettre un signal pilote ;
- au moins une soupape de verrouillage (8) placée en amont de chaque actionneur (2), qui est connectée de manière opérationnelle à ladite conduite principale et à ladite conduite pilote, ladite soupape étant unidirectionnelle vers l'actionneur et pilotable pour s'ouvrir dans la direction opposée et étant jaugée pour s'ouvrir sur un premier niveau de pression de la conduite pilote (6) ;
ledit circuit étant **caractérisé en ce qu'**il comprend en outre :
- un distributeur (16) qui est connecté de manière opérationnelle à ladite conduite principale (4) et à ladite conduite pilote (6) et pouvant être relié audit dispositif destiné à pressuriser le fluide ; et
- une soupape de verrouillage principale (12) en amont de ladite au moins une soupape de verrouillage (8) et en aval dudit distributeur, qui est connectée de manière opérationnelle audit distributeur (16)), à ladite conduite pilote et à ladite conduite principale, ladite soupape de verrouillage principale (12) étant jaugée pour s'ouvrir sur un deuxième niveau de pression de la conduite principale (4) qui est supérieur au premier niveau de pression, dans ladite position d'ouverture le reflux du fluide de travail étant autorisé depuis la conduite principale.

2. Circuit selon la revendication 1, dans lequel ledit au moins un actionneur (2) est un actionneur à simple effet.

3. Circuit selon la revendication 1, dans lequel ledit au moins un actionneur (2) est un actionneur à double effet.

4. Circuit selon l'une quelconque des revendications précédentes, dans lequel ladite soupape de verrouillage principale (12) est une soupape à quatre voies.

5. Circuit selon l'une quelconque des revendications 1 à 3, dans lequel ladite soupape de verrouillage (8) est une soupape à trois voies.

6. Circuit selon l'une quelconque des revendications précédentes, dans lequel ledit distributeur (16) présente une position neutre, dans laquelle ladite conduite pilote (6) est vidangée.

7. Circuit selon l'une quelconque des revendications précédentes, dans lequel ledit distributeur (16) présente une position de levée dans laquelle ledit dispositif destiné à pressuriser le fluide est connecté de manière opérationnelle à ladite conduite principale (4).

8. Circuit selon l'une quelconque des revendications précédentes, dans lequel ledit distributeur présente une position d'abaissement, dans laquelle ladite conduite pilote (6) est sous pression.

9. Système hydraulique comprenant un circuit (1) selon l'une quelconque des revendications précédentes, comprenant en outre ledit dispositif destiné à pressuriser le fluide.

10. Système selon la revendication 9, dans lequel ledit dispositif destiné à pressuriser le fluide est une électropompe.

11. Remorque, semi-remorque ou véhicule destiné à transporter des marchandises comprenant une passerelle ou une plateforme de charge devant être levée et abaissée, et un circuit selon l'une quelconque des revendications précédentes 1 à 8.

12. Remorque, semi-remorque ou véhicule selon la revendication 11 comprenant des actionneurs supplémentaires, qui n'agissent pas conjointement aux soupapes de verrouillage (8).

13. Circuit hydraulique (1) adapté pour agir conjointement à une passerelle et/ou une plateforme de charge devant être levée et abaissée, dans lequel ledit circuit comprend :
- au moins un actionneur (2) qui est connectable de manière opérationnelle à ladite passerelle ou ladite plateforme de charge ;
- une conduite principale (4) destinée à amener le fluide de travail audit actionneur (2) ;
- une conduite pilote (6) séparée de ladite conduite principale (4), qui est adaptée pour transmettre un signal pilote ;
- au moins une soupape de verrouillage (8) placée en amont de chaque actionneur (2), qui est connectée de manière opérationnelle à ladite conduite principale, ladite soupape étant unidirectionnelle vers l'actionneur et pilotable pour s'ouvrir dans la direction opposée par le signal pilote ;
ledit circuit étant **caractérisé en ce qu'**il comprend en outre une soupape de verrouillage principale (12), qui est connectée de manière opérationnelle à ladite conduite principale (4), ladite soupape de verrouillage principale (12) étant pilotable pour s'ouvrir par les conditions de charge pesant sur la passerelle pour permettre un reflux du fluide de travail depuis la conduite principale.

14. Circuit hydraulique (1) adapté pour agir conjointement à une passerelle et/ou une plateforme de charge pour lever et abaisser, dans lequel ledit circuit comprend:
- au moins un actionneur (2) qui est connectable de manière opérationnelle à ladite passerelle ou ladite plateforme de charge;
- une conduite principale (4) destinée à amener le fluide de travail audit actionneur (2);
- une conduite pilote (6) séparée de ladite conduite principale (4), adaptée pour transmettre un signal pilote;
- au moins une soupape de verrouillage (8) placée en amont de chaque actionneur (2), qui est connectée de manière opérationnelle à ladite conduite principale,
ledit circuit étant **caractérisé en ce qu'**il comprend en outre une soupape de verrouillage principale (12) en amont de la au moins une soupape de verrouillage (8), qui est connectée de manière opérationnelle à ladite conduite principale (4), où, pour abaisser la passerelle, ledit signal pilote autorise l'au moins une soupape de verrouillage (8) et la charge pesant sur la passerelle ouvre ladite soupape de verrouillage principale (12) pour le reflux du fluide de travail depuis la conduite principale (4).
